(19) Europäisches Patentamt
European Patent Office
Office européen des brevets

(11) **EP 4 432 224 A1**

(12) **EUROPEAN PATENT APPLICATION**
published in accordance with Art. 153(4) EPC

(43) Date of publication:
**18.09.2024 Bulletin 2024/38**

(21) Application number: **22893123.4**

(22) Date of filing: **07.11.2022**

(51) International Patent Classification (IPC):
$G06T\ 7/11$ (2017.01)    $G06T\ 7/70$ (2017.01)
$G06V\ 20/56$ (2022.01)    $H04W\ 4/40$ (2018.01)
$H04W\ 4/12$ (2009.01)    $G06N\ 3/08$ (2023.01)

(52) Cooperative Patent Classification (CPC):
G06N 3/08; G06T 7/11; G06T 7/70; G06V 20/56;
H04W 4/12; H04W 4/40

(86) International application number:
**PCT/KR2022/017299**

(87) International publication number:
**WO 2023/085702 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.11.2021 KR 20210152674**

(71) Applicant: **LG Electronics Inc.**
**Yeongdeungpo-gu**
**Seoul 07336 (KR)**

(72) Inventors:
• KIM, Myoungseob
  Seoul 06772 (KR)
• KIM, Hakseong
  Seoul 06772 (KR)
• SEO, Hanbyul
  Seoul 06772 (KR)
• HWANG, Jaeho
  Seoul 06772 (KR)

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD BY WHICH FIRST DEVICE TRANSMITS FIRST MESSAGE IN WIRELESS COMMUNICATION SYSTEM, AND APPARATUS THEREFOR**

(57)    Disclosed are a method by which a first device transmits a first message and an apparatus therefor, according to various embodiments. Disclosed are: the method for predicting at least one detection region on the basis of features extracted for an image and first location information, and transmitting a first message on the basis of object information acquired from a detection model pre-trained so that object information corresponding to first type information is output for the at least one detection region, and a received second image; and an apparatus therefor.

FIG. 11

(a)    (b)    (c)    (d)

**Description**

**TECHNICAL FIELD**

Disclosed is a method and device for transmitting a first message based on object information obtained based on a learned detection model and a received second message by a first device in a wireless communication system.

**BACKGROUND**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

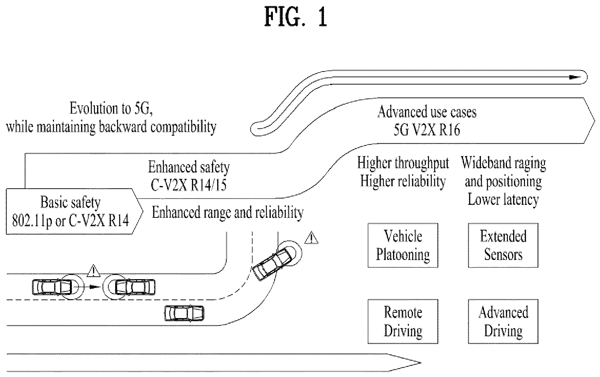

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

## DISCLOSURE

## TECHNICAL PROBLEM

An object of the present disclosure is to provide a method and device for training a detection model for detecting an object from an image more accurately and rapidly by rapidly predicting a detection region related to object detection in the image by using an image and information provided in a message related to the image and comparing information provided in a message with classification information about predicted detection region.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

## TECHNICAL SOLUTION

According to an aspect, a method of transmitting a first message by a first device in a wireless communication system includes obtaining sensing information, receiving a second message including first location information and first type information from a second device based on configuration information, and transmitting the first message for forwarding the second message, wherein the configuration information includes first configuration information for a sidelink signal or second configuration information for an uplink signal, the first configuration information includes information about a resource pool for transmission and reception of the sidelink signal and information about transmission power control and subchannels, the second configuration information includes information about a subcarrier spacing, a resource block size, a transmission power control parameter, and a frequency band, the second message is transmitted based on at least one of physical sidelink shared channel (PSSCH) and physical sidelink control channel(PSCCH) based on that the configuration information is the second configuration information, the first device obtains object information by inputting an image provided in the sensing information and the second message to a detection model based on an artificial neural network and transmits the first message based on the object information and the second message, and the detection model predicts at least one detection region based on features extracted for the image and the first location information and is pre-learned to output object information corresponding to the first type information for the at least one detection region.

The at least one detection region may be predicted based on the first location information and a preset range.

The at least one detection region may include a detection region within a preset range from location information provided in the second message from among a plurality of detection regions determined based on the features extracted from the image.

Based on that an object height estimated based on the at least one detection region is outside a preset range from the object height based on the type information, the at least one detection region may not be used as data for learning the detection model.

The object height may be estimated only for the at least one detection region that overlaps another detection region.

The object information may include second type information and second location information of the detected object.

Based on that the first type information and the second type information are different from each other, the first message may include the first type information corrected based on the second type information.

Based on that the first location information is different from the second location information, the first message may include the first location information corrected based on the second location information.

The first device may use type information provided in the second message as label information for learning of the detection model.

The detection model outputs the object information based on regions with convolutional neuron network (R-CNN).

The second message may include a vehicle to everything (V2X) message.

According to another aspect, a first device for transmitting a first message in a wireless communication system includes a radio frequency (RF) transceiver, and a processor connected to the RF transceiver, wherein the processor is configured to obtain sensing information, control the RF transceiver to receive a second message including first location and first type information from a second device based on configuration information, obtain object information by inputting an image provided in the sensing information and the second message to a detection model based on an artificial neural network, and transmit the first message for forwarding the second message based on the object information and the second message, the configuration information includes first configuration information for a sidelink signal or second configuration information for an uplink signal, the first configuration information includes information about a resource pool for transmission and reception of the sidelink signal and information about transmission power control and subchannels, the second configuration information includes information about a subcarrier spacing, a resource block size, a transmission power control parameter, and a frequency band, the second message is transmitted based on at least one of physical sidelink control channel (PSCCH) and physical sidelink shared channel (PSSCH) based on that the configuration information is the second configuration information, and the detection model predicts at least one detection region based on features extracted for the image and the first location information and is pre-learned to output object information corresponding to the first type information for the at least one detection region.

The at least one detection region may be predicted based on location information provided in the second message and a preset range.

According to another aspect, a chip set for transmitting a first message in a wireless communication system includes at least one processor, and at least memory operatively connected to the at least one processor and configured to when executed cause the at least one processor to perform an operation including, obtaining sensing information, controlling the RF transceiver to receive a second message including first location and first type information from a second device based on configuration information, obtaining object information by inputting an image provided in the sensing information and the second message to a detection model based on an artificial neural network, and transmitting the first message for forwarding the second message based on the object information and the second message, wherein the configuration information includes first configuration information for a sidelink signal or second configuration information for an uplink signal, the first configuration information includes information about a resource pool for transmission and reception of the sidelink signal and information about transmission power control and subchannels, the second configuration information includes information about a subcarrier spacing, a resource block size, a transmission power control parameter, and a frequency band, the second message is transmitted based on at least one of physical sidelink control channel (PSCCH) and physical sidelink shared channel (PSSCH) based on that the configuration information is the second configuration information, and the detection model predicts at least one detection region based on features extracted for the image and the first location information and is pre-learned to output object information corresponding to the first type information for the at least one detection region.

According to another aspect, a computer-readable storage medium including at least one computer program in a wireless communication system includes at least one computer program configured to perform an operation of transmitting a first message by at least one processor, and a computer-readable storage medium with the at least one computer program stored therein, wherein the operation includes: obtaining sensing information; controlling the RF transceiver to receive a second message including first location and first type information from a second device based on configuration information; obtaining object information by inputting an image provided in the sensing information and the second message to a detection model based on an artificial neural network, and transmitting the first message for forwarding the second message based on the object information and the second message, the configuration information includes first configuration information for a sidelink signal or second configuration information for an uplink signal, the first configuration information includes information about a resource pool for transmission and reception of the sidelink signal and information about transmission power control and subchannels, the second configuration information includes information about a subcarrier spacing, a resource block size, a transmission power control parameter, and a frequency band, the second message is transmitted based on at least one of physical sidelink control channel (PSCCH) and physical sidelink shared channel (PSSCH) based on that the configuration information is the second configuration information, and the detection model predicts at least one detection region based on features extracted for the image and the first location information and is pre-learned to output object information corresponding to the first type information for the at least one detection region.

## ADVANTAGEOUS EFFECTS

According to various embodiments, a detection model for detecting an object from an image more accurately and rapidly may be trained by rapidly predicting a detection region related to object detection in the image by using an image and information provided in a message related to the image and comparing information provided in a message with classification information about predicted detection region.

A more accurate detection region may be provided a region for detecting an object by adjusting the size and shape of the detection region based on object information provided in the message.

The detection model may be trained more accurately and rapidly by determining the learning effectiveness of the detection region that overlaps with other detection regions based on the object information provided in the message.

Information provided in a second message received based on object information obtained through the learned detection model may be more accurately corrected and provided to nearby terminals.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 is a diagram for explaining by comparing V2X communication based on RAT before NR and V2X communication based on NR.

FIG. 2 illustrates the structure of an LTE system to which embodiment(s) are applicable.

FIG. 3 illustrates the structure of an NR system to which embodiment(s) are applicable.

FIG. 4 illustrates the structure of an NR radio frame to which embodiment(s) are applicable.

FIG. 5 illustrates the slot structure of an NR frame to which embodiment(s) are applicable.

FIG. 6 illustrates a radio protocol architecture for SL communication.

FIG. 7 illustrates UEs performing V2X or SL communication.

FIG. 8 illustrates resource units for V2X or SL communication.

FIG. 9 is a diagram for explaining an ITS station reference architecture.

FIG. 10 illustrates an exemplary structure of an ITS station that may be designed and applied based on a reference architecture.

FIGS. 11 to 13 are diagrams to explain a method of learning for object detection based on a V2X message by a detection model or a first device.

FIG. 14 is a flowchart illustrating a method of learning a detection model for detecting an object in an image based on a V2X message.

FIG. 15 is a diagram illustrating a method by which a first device trains a detection model based on an image and a message received in response to an image.

FIG. 16 is a diagram illustrating a method by which a first device transmits a first message based on object information obtained using a detection model and a received second message.

FIG. 17 illustrates a communication system applied to the present disclosure.

FIG. 18 illustrates wireless devices applicable to the present disclosure.

FIG. 19 illustrates another example of a wireless device to which the present disclosure is applied.

FIG. 20 illustrates a vehicle or an autonomous driving vehicle applied to the present disclosure.

## BEST MODE

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

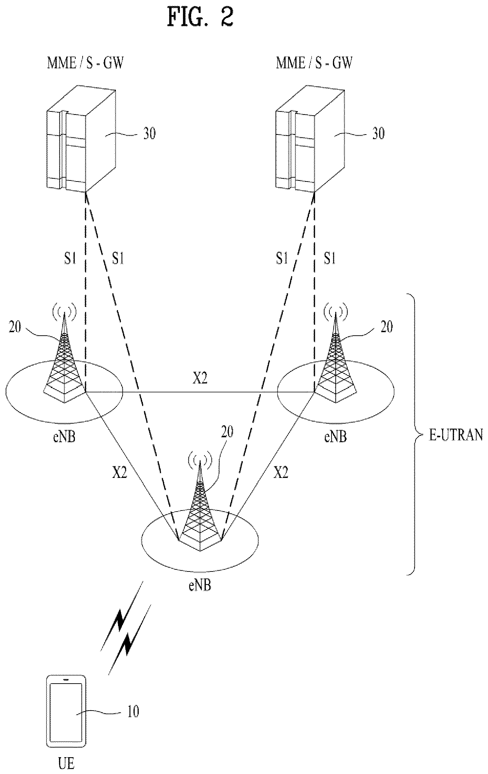

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

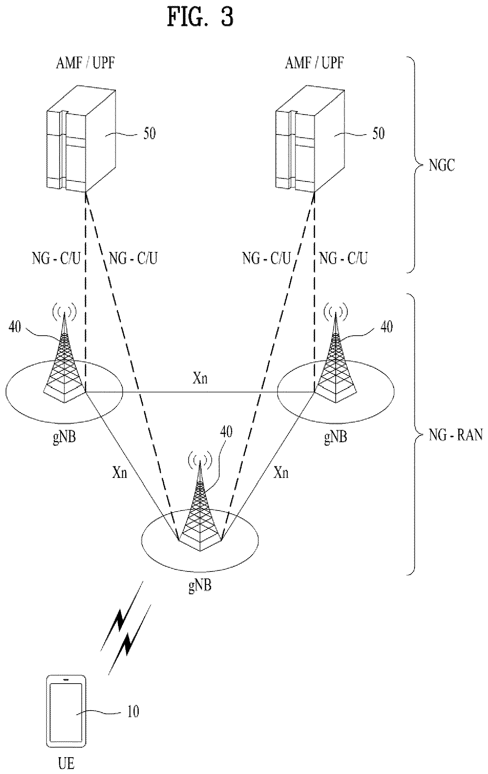

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

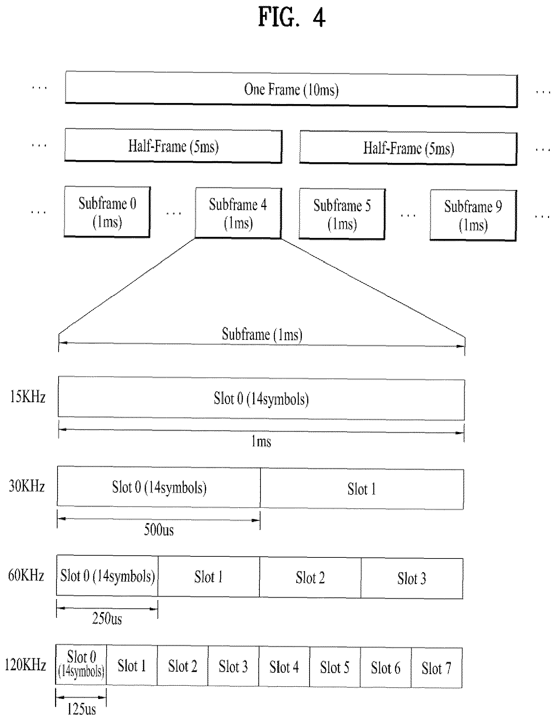

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | Nslotsymb | Nframe,uslot | Nsubframe,uslot |
|---|---|---|---|
| (u=2) 60 kHz | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

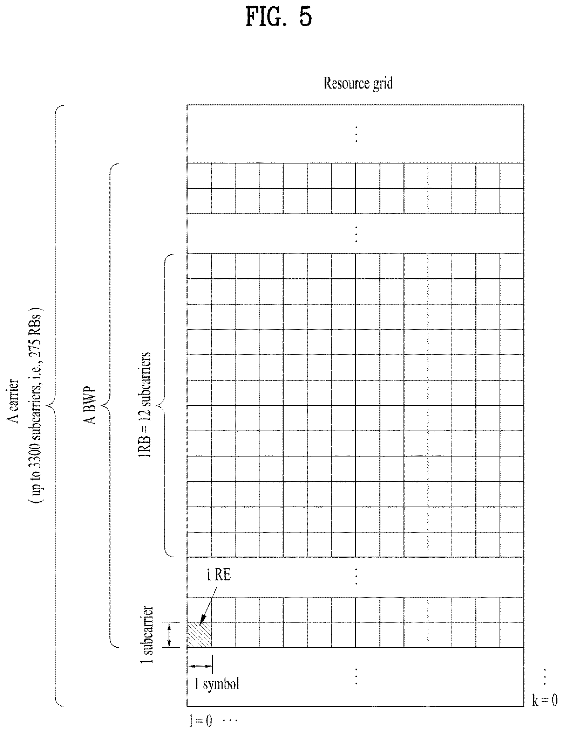

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

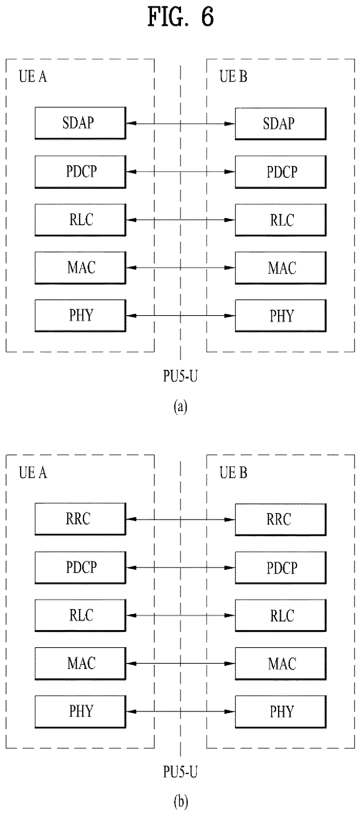

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

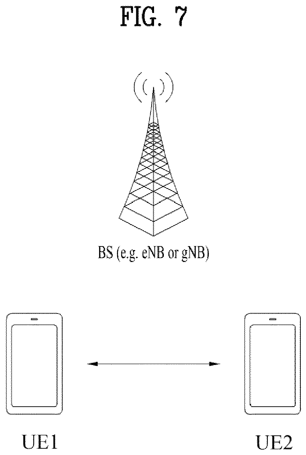

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

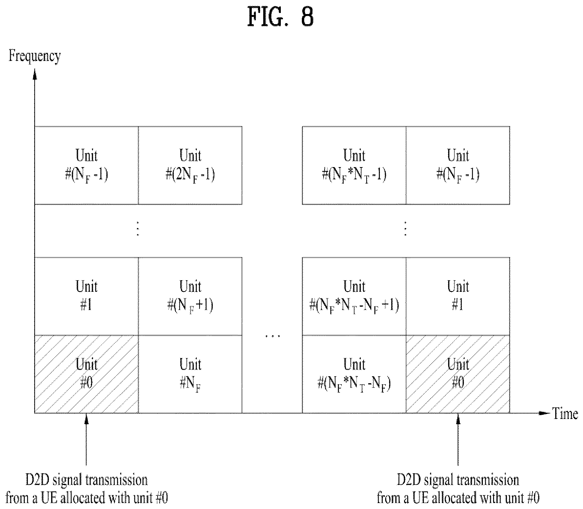

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

### Vehicular Communications for ITS

An intelligent transport system (ITS) utilizing vehicle-to-everything (V2X) may mainly include an access layer, a network & transport layer, a facilities layer, an application layer, security and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as ITS stations.

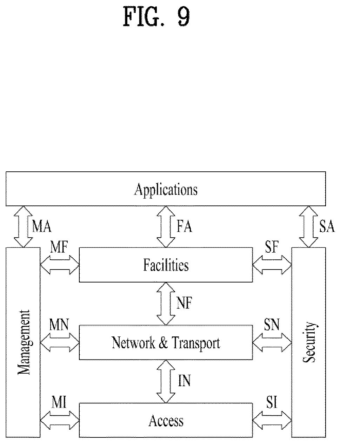

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.

MA: Interface between management entity and application layer
MF: Interface between management entity and facilities layer
MN: Interface between management entity and networking & transport layer
MI: Interface between management entity and access layer
FA: Interface between facilities layer and ITS-S applications
NF: Interface between networking & transport layer and facilities layer
IN: Interface between access layer and networking & transport layer
SA: Interface between security entity and ITS-S applications
SF: Interface between security entity and facilities layer
SN: Interface between security entity and networking & transport layer
SI: Interface between security entity and access layer

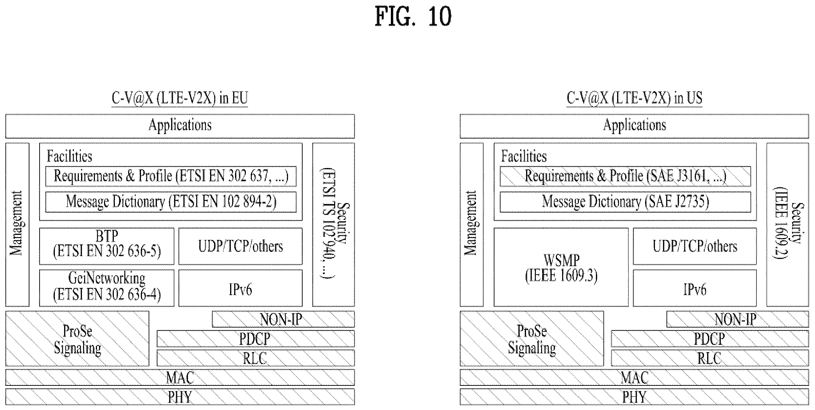

FIG. 10 illustrates an exemplary structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application later actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g. MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

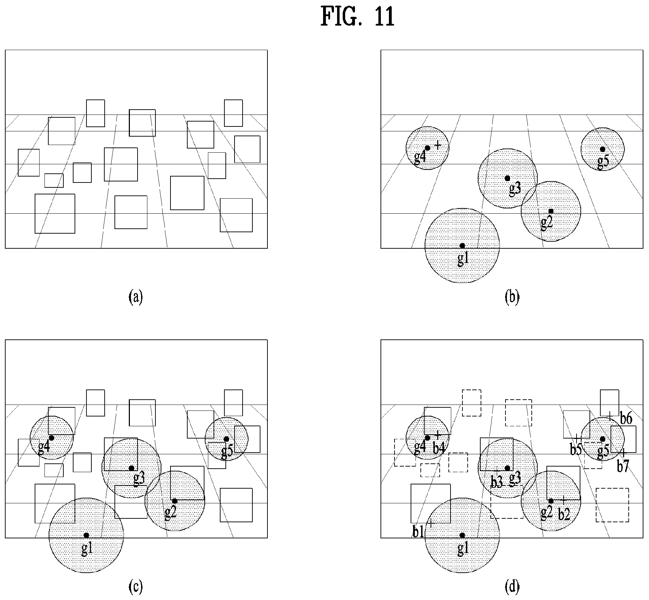

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols as illustrated in FIG.11, and there are transport protocols only for the ITS, such as the BTS.

The network layer serves to determine a logical address and a packet forwarding method/path, and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multi-channel operation (MCO) included in the data link layer of FIG. 11 will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may performs functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A Soft V2X system may be a system in which a Soft V2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the Soft V2X server through the UU interface, and may include mobility information about the VRU, such as a position, a movement direction, a movement path, and a speed of the VRU. That is, the Soft V2X system may use a method of receiving mobility information of VRUs and/or vehicles related to V2X communication through the UU interface and controlling a driving route or a VRU movement flow of the VRU, etc. based on the mobility information received by the Soft V2X server, such as a network. The Soft V2X system may be configured in relation to V2N communication.

User equipment or pedestrian equipment (VRU device) that is difficult to perform direct communication (PC5, DSRC) related to V2X communication can provide or receive driving information and mobility information to nearby vehicles or VRUs through the Soft V2X system based on the UU interface. Through this, the user equipment or pedestrian equipment (VRU device) that is difficult to perform the direct communication (PC5, DSRC) can be protected from surrounding vehicles.

## V2X message based region proposal for AI learning of image detection

A device such as a road side unit (RSU) may provide a service for traffic safety by detecting movement of a pedestrian or a vehicle through image detection through a camera sensor, etc. and predicting a direction of movement based on the detected movement. In this case, it may be important to accurately determine whether the detected image is a pedestrian or a person riding a bicycle, or whether to detect that another object moves. To this end, it may be necessary to distinguish between necessary categories and non-necessary categories when detecting objects in the image and learn the same. For example, to train (or learn) an artificial neural network to detect objects most accurately and most similar to a human recognition reference from the image, a user needs to directly check classification information for the image as learning data or directly check a region in an image corresponding to the classification information. In this case, the artificial neural network may be trained by inputting the detection region and classification information (or category information (e.g., label or annotation)) checked by the user into the artificial neural network.

An artificial neural network learned in this way or a detection model based on the artificial neural network may have a greatly improved object recognition rate, but may require a considerable amount of time and manpower to complete learning of the model. In particular, as the number of places in which the cameras or CCTVs are installed increases, more costs are incurred, and in particular, whenever an installation environment (an installation height or a camera angle) changes, it may be disadvantage that the above manual work needs to be continuously performed.

In the case of the above-mentioned road users, the users simply move without any device, but when the users have a terminal (e.g. V2X) for location recognition and for transmitting information about the recognized location, learning of the model may be effectively and rapidly performed through the information. Hereinafter, a method of performing learning for the model by additionally considering a V2X messages in learning the above-described model will be described in detail.

The above-mentioned image detection may include all of a classification problem of classifying a class of each object (multiple objects) rather than simply a single object, and a localization problem indicating location information about where the object is located through a bounding box. In detail, the object detection may be divided into a 1-stage detector that detects classification and localization at once, and a 2-stage detector that performs classification and localization sequentially, depending on a method. In the case of the 1-stage detector, a processing speed is high but the accuracy is low, and in the case of the 2-stage detector, a processing speed is low but the accuracy is high. As described below, R-CNN and successor models there of may perform a 2-stage detector method with relatively high accuracy in relation to object detection. Here, the regions with CNN (R-CNN) may be a method of object detection by performing convolutional neural network (CNN) on a specific region in the image. Here, when the specific region is for an image region in a real space, learning of the model or image detection may be performed using real space coordinates for the specific region.

In detail, the image detection may be performed based on at least one of a deep neural network (DNN), a convolutional neural network (CNN), or the R-CNN.

- DNN: In the case of an existing deep neural network (DNN) method, the image is flattened into one dimension and used, but the spatial/regional information of the image may be lost in this process. Calculations are performed directly without an abstraction process, and thus a learning time may increase and efficiency may decrease.
- CNN: CNN may be a method proposed to compensate for the disadvantage of DNN and may accept raw data of the image as is and extract the features of the image while maintaining spatial/regional information. It is important in the CNN that a key part with a feature point is focused rather than an entire image, and to this end, a correlation between a specific pixel and adjacent pixels thereto in the image is derived.
- Regions with CNN (R-CNN): R-CNN is a first model to apply the CNN to a field of object detection, and the CNN method may have excellent performance not only in classification but also in a field of object detection. A basic structure of the R-CNN may include a region proposal that first finds a location of an object, and a region classification that classifies a type of an object in the proposed region. In detail, to propose the region proposal, a device that performs object detection based on an artificial neural network model may search for regions in which detection of an object is to be predicted based on CPU (e.g. selective search algorithm) to create a plurality of bounding boxes (e.g., 2000 or more) and obtain a result value after classification by performing CNN on each bounding box.

Hereinafter, a method for a device to learn a detection model based on an artificial neural network by additionally considering a V2X message and a method of detecting an object in an image using the detection model will be described in detail.

## V2X message-based image detection learning assistance

A V2X message may include mobility information of an object or other input information (the remaining portion except for a portion that visually recognizes a target object). For example, the V2X message may include location information, sensor information (speed, acceleration, or direction), type information (e.g., manual input, or automatic detection), and/or device type information. Object detection (or image detection) based on the detection model may additionally consider information provided in the V2X message.

In detail, the detection model (a model based on an R-CNN-based method) may additionally use location information and/or sensing information provided in the V2X message in configuration of the bounding box (or region). The detection model may be learned through supervised learning through learning data including classification information (label information) of an object predefined by the user and a corresponding image. Alternatively, the detection model may be learned through unsupervised learning to automatically perform a classification operation using only an image without the classification information. In the latter case, there is an advantage that an image without label information corresponding to the image is to be used as learning data, but there is a disadvantage of having to rely only on the classification performance and classification reliability of the learning model. This disadvantage may be resolved through additional consideration of sensing information, location information, and type information provided in the V2X message. For example, the detection model may perform localization of a region in which object detection is required through the location information provided in the V2X message, and perform a classification operation on the detected object based on information about the device type provided in the V2X message. In this case, the detection model may indirectly obtain classification information related to object detection through the V2X message, and thus may be substantially learned using a supervised learning method.

Hereinafter, a method of learn a detection model by additionally considering information provided in the V2X message will be described in detail.

## Region proposal

FIGS. 11 to 13 are diagrams to explain a method of learning for object detection based on a V2X message by a detection model or a first device.

First, a method of searching for regions in which object detection is required based on information provided in the V2X message by the detection model or the first device will be described. Regions requiring object detection may be searched through the detection model or may also be searched by the first device. Hereinafter, for convenience of explanation, a description will be given on the assumption that the detection model searches for regions in which object detection is required.

As described above, the R-CNN structure related to the detection model may propose regions (e.g., up to 2,000) in which discovery of an object is predicted through a selective search method on an image or video. In this case, the detection model may limit a region in which the corresponding object is to be detected within a certain (error) range based on the location information provided in the V2X message. For example, the detection model may select a valid region through a received V2X message from among the above-mentioned regions (e.g., 2,000 regions) or perform selective search in a certain region or surrounding region thereof by the V2X message. For example, when 10 V2X messages containing location information within a photography area related to an image are received, the detection model may not perform selective search for the entire photography area, but may search for only about 10 bounding boxes corresponding to the location information of the V2X message.

For example, referring to (a) of FIG. 11, the detection model (or R-CNN) may propose a significant number of regions (bounding box candidate group) in the photography area (without knowing exactly the number of objects to be detected) as detection regions in which object defection is required. In contrast, referring to (b) of FIG. 11, the detection model may greatly reduce a region in which object detection is required from among the bounding boxes based on the received V2X message. For example, when first to fifth messages (g1 to g5) corresponding to the photography area are received, the detection model may determine (or filter) valid bounding box regions based on x, y coordinates (latitude and longitude coordinates) provided in each message from among the bounding boxes. In this case, the detection model may propose the bounding box regions as detection regions in which object detection is required. Alternatively, referring to (c) of FIG. 11, the detection model may search for or determine a region in which bounding boxes (region proposals) and the location information of the V2X message (or a circular region with a predetermined radius centered on the location information) overlap each other, as the detection region. Alternatively, referring to (d) of FIG. 11, the detection model may configure a reference point (coordinates corresponding to a ground level (a center point of the bottom of the bounding box) of a bounding box created assuming that all target objects are moving at the ground level) corresponding to each of the bounding boxes and determine at least one bounding box with the reference point configured within a predetermined distance from the location information provided in each message as the detection region. For example, as shown in (d) of FIG. 11, the detection model may determine bounding boxes having reference points b1 to b4 from among the bounding boxes as the detection regions. When there is no bounding box provided in a coverage (a predetermined distance from the location information) as in a fifth message g5 in (d) of FIG. 11, the detection model may determine fifth to seventh bounding boxes (b5 to b7, bounding box candidates) as the detection region corresponding to the fifth message g5. For example, even if the fifth bounding box b5 exists outside an error range of the fifth message g5 instantaneously, the detection model may check that the fifth bounding box b5 and the fifth message g5 are for corresponding objects through tracking for a predetermined time.

Alternatively, transformation of a relative position with a camera or actual coordinate may be possible through coordinates of a ground level (or of a pixel within the image) for the bounding box. Such actual coordinate transformation may simply be predetermined through actual measurement in the image region. Alternatively, the actual coordinate transformation may be derived mathematically based on the camera specifications and installation environment. For example, a relative position $(x, y)$ of a subject (with respect to a ground level) corresponding to specific (pixel) coordinates $(a, b)$ in the image may be expressed as $GL(a, b) = (x, y)$. In more detail, in a specific installation environment, the relative position $(x, y)$ of the subject may expressed as $GL(a, b) = f(h, \theta, r, d, f0, a, b)$. Here, h is an installation height of the camera, $\theta$ is an installation angle of the camera, r is a horizontal and vertical ratio of an image sensor, d is a size of the image sensor (it is appropriate that a ratio of an effective image sensor region is the same as ratio of a display region in which the image is to be displayed),f0 may be a focal distance from the sensor, a may be a horizontal coordinate on the display, and b may be a vertical coordinate on the display. A relative distance to the subject may be calculated through the transformation equation $(GL(a, b) = f(h, \theta, r, d, f0, a, b))$. The height and width of the subject may be predicted depending on the horizontal and vertical heights of the bounding box for the subject (or object). However, an area of the subject (object) may vary significantly depending on a direction of movement, or the like, and thus simple calculation of the size of the bounding box may be inaccurate. In the case of subjects (objects) that are photographed without being significantly affected by the width of the subject, such as pedestrians or kickboards, it may be more appropriate to calculate the height of the subject through Equation 1 below.

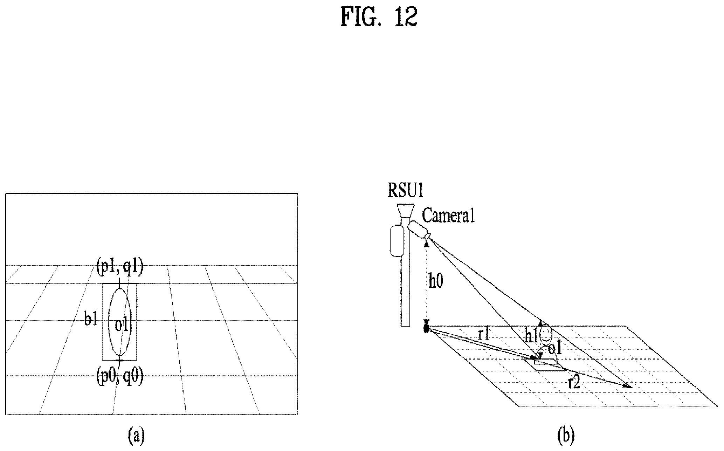

For example, referring to FIG. 12 (a), a first bounding box b1 corresponding to a first object o1 may be configured, a ground level of the first bounding box may be (p0, q0) and a top level (coordinates of a pixel representing the maximum height in the image) may be (p1, q1). In this case, the height of an object corresponding to the first bounding box b1 may be estimated based on a proportional relationship as shown in (b) of FIG. 12. In other words, a relative distance r1 or coordinates (x1, y1) for a relative location may be derived by the ground level (p0, q0), and a relative distance r2 or coordinates ( x2, y2) for the relative location may be derived. In this case, a height h1 of the subject may be estimated or calculated based on Equation 1 below. Here, h0 may be an installation height of the camera.

[Equation 1]

$$h_1 = h_0 * \frac{r_2 - r_1}{r_2} = h_0 * \frac{r(GL(p0, q1)) - r(GL(p0, q0))}{r(GL(p0, q1))}$$

In this case, r(GL(p, q)) is a distance $r = \sqrt{x^2 + y^2}$ obtained from coordinates (e.g., GL(p, q) = (x, y)) derived from the result GL(p, q). That is, the height h1 of the object may be obtained through the size of the first bounding box. In this case, the suitability of the V2X message corresponding to the first bounding box may be determined through type information of the corresponding V2X message, size information of the corresponding type related thereto, and specification information (e.g. adult pedestrian = average of 1.65 m, cyclist = average of 1.5 m). In this case, the first bounding box may not be segmented exactly according to the size of an actual object o1. In this case, the size of the actual object o1 may be less than the value derived based on Equation 1 above (depending on how large the bounding box is determined). When the size information for each type is different for each object (e.g. average of x.yz m), the suitability of the first bounding box and the V2X message corresponding thereto may be determined in consideration of an acceptable error range (e.g. 50 cm) from the derived value. When the V2X message contains more definitive and specific information about the corresponding object (e.g. height, depth, or width), the size of the first bounding box may be regressed to further match the object by using such information.

When the proposed bounding boxes in the image intersect with each other, key information such as the location or height of a target object may not be accurately obtained. For example, classification of the image may not be clear due to hiding between objects. In this case, learning to detect objects corresponding to the bounding box (e.g. learning about hidden or partial objects) may not be performed properly. Therefore, when bounding boxes intersect with each other or there are bounding boxes expected to be hidden, the validity of whether the location, size, and the like of the bounding boxes are for corresponding objects may be checked through comparison with surrounding V2X messages.

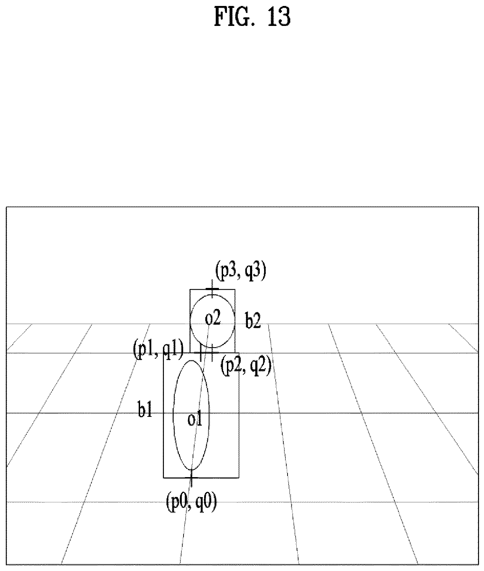

For example, referring to FIG. 13, there may be two bounding boxes b1 and b2 that overlap with each other in a certain portion, and V2X messages corresponding to each bounding box may be received. In this case, the first bounding box b1 for the first object o1 may be determined to be appropriately created, but the second bounding box b2 for the second object o2 may be partially hidden (or, the second object may be determined to be a portion of another larger object (e.g. o1+o2)). In detail, when the first object o1 is accurately detected as a cycle, the second object o2 may be classified as a pedestrian or a partial form of a person. For example, the image corresponding to the second object o2 may be in the form of a person hidden behind the cycle or in the form of a cyclist (o1+o2). That is, a type or shape of the object may be determined based on a region in which the second bounding box b2 is hidden. For example, the second bounding box b2 may not be hidden at all (ground level of b2 = (p2, q2)), may be completely hidden by the first bounding box b1 (ground level of b2 = (p2, q0)), or may be hidden at a specific ratio between (p2, q2) and (p2, q0) (q0 <= GL_y <= q2 assuming that a value of y of the ground level of b2 is $GL_y$).

When the second bounding box b2 is not hidden at all, an expected location (relative location) of the second object o2 may be derived as GL(p2, q2) from (p2, q2) which is a ground level of the second bounding box b2. In this case, the size $h_2$ of the second object o2 may be calculated or estimated by Equation 2 below.

[Equation 2]

$$h_2 = h_0 * \frac{r\big(GL(p2, q3)\big) - r\big(GL(p2, q2)\big)}{r\big(GL(p2, q3)\big)} = h_0 * \left(1 - \frac{r\big(GL(p2, q2)\big)}{r\big(GL(p2, q3)\big)}\right)$$

When the second bounding box b2 is completely hidden by the first object o1, the expected location (relative location) of the second object o2 may be derived as GL(p2, q0) from (p2, q0) which is a ground level of the second bounding box b2. In this case, the size of the second object o2 may be calculated or estimated by Equation 3 below.

[Equation 3]

$$h_2 = h_0 * \left(1 - \frac{r\big(GL(p2, q0)\big)}{r\big(GL(p2, q3)\big)}\right)$$

That is, when there is a V2X message related with the location of the GL (p2, q2) to GL (p2, q0) (i.e., within an error range), whether the calculated value of h2 may be verified by comparing (a range of) a value of a typical or predefined size according to type information (or information about a device type) indicated by the V2X message with a range of the value h2. Through this method, when it is to be checked that the V2X message and an object of the value h2 are related to each other, the detection model may perform learning for object detection for a partially hidden object based on the above correlation.

As described above, when the location information of the received V2X message and the corresponding bounding box match each other at 1:1, object detection and classification for the bounding box may proceed, and when there is no 1:1 matching, an operation of matching a bounding box corresponding to the location information of the received V2X message needs to be preceded. Hereinafter, an operation related to the matching will be described in detail.

**Object-message matching**

Detection regions proposed by the detection model (through an localization operation) based on R-CNN are only candidate proposal regions corresponding to objects until object-message matching, and the proposed regions may not be suitable to perform learning of the detection model.

When multiple messages are received around one object or multiple objects exist around one message, an object and a message, trajectories of which have the highest similarity (e.g., a small relative distance/error between pairs) may be determined as a matching pair. When a plurality of messages are received around a plurality of objects, the optimal matching pair may be determined based on all possible pair combinations between the objects detected in the image and the plurality of messages.

In the case of matching between objects and messages to assist in artificial intelligence learning, it is not necessarily necessary to maintain matching while seamlessly tracking the target object. For example, a sufficient combination of images (e.g., front, side, or side 45 degrees) is detected for images captured at several angles and positions to be characteristic points in an entire path, and it may be sufficient simply by inputting the detected images to the detection model.

Referring to (b) or (d) of FIG. 11 described above, the fifth bounding box b5 for the fifth object o5 is misaligned with the location (GPS) information of the fifth message g5. A segmentation of an object to which the bounding box corresponds may not be accurate and is created around a target object, and thus an additional error may be considered. The GPS location information provided in the message may be received at a relatively long period, and thus to match an image acquisition period, some sections may be predicted (linear prediction (or extrapolation), or polynomial fitting) or interpolated (e.g. linear interpolation) in an appropriate manner between sample values of the GPS information to obtain and use location information related to the message. Through this assumption, the fifth bounding box b5 and the location information of the fifth message g5 may be located within an error range over time. For example, when a predetermined condition is satisfied (e.g., when the fifth bounding box b5 and the location information g5 of the fifth message intersect with each other within an error range for t1 seconds or do not deviate from the error range for more than t2 seconds), the location information of the fifth bounding box b5 and the fifth message g5 may be determine as a matching pair for the same object.

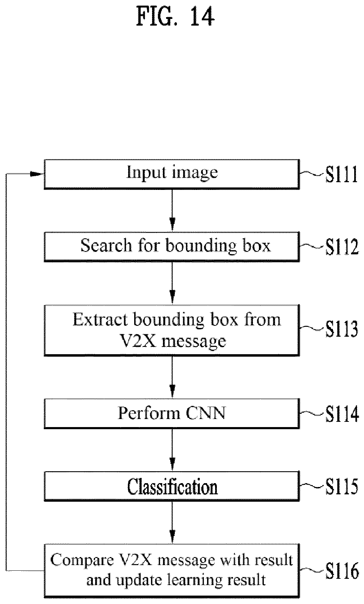

FIG. 14 is a flowchart illustrating a method of learning a detection model for detecting an object in an image based on a V2X message.

As described above, learning of a detection model based on R-CNN may be performed more efficiently and automatically through proposal and classification of a detection region based on the V2X message. In this case, the accuracy of proposal and classification of the detection region of the detection model may be greatly improved by learning based on learning data for valid objects if possible.

Referring to FIG. 14, a first device may train the detection model for object detection through processes that additionally consider V2X messages.

In detail, the first device may input a detection model using input images (videos, snapshots, etc.) obtained from a camera as learning data (S111). The learning data may further include V2X messages received in association with or related to the input image. The first device may train the detection model to search for bounding boxes (or bounding box region) within a certain range based on each of the V2X messages provided in the learning data (S112). For example, the detection model may not find all bounding boxes (e.g., 2,000 regions) in which detection of an object is predicted based on the features extracted for the image, but may search for bounding boxes in which the object detection is predicted within a predetermiend range (e.g., within 50 m based on actual coordinates or within ±n pixels horizontally and ±m pixels vertically based on image coordinates (mapped to the location information)) from location information contained in the V2X message (S113). Then, the first device may train the detection model to extract a bounding box that matches the V2X message from among the searched bounding boxes based on the information provided in the V2X messages (S115). However, the bounding boxes intersect with each other and a portion of a shape of an object is hidden, making it difficult to accurately determine object information (location information, object size, etc.), or there may be multiple bounding boxes corresponding to the V2X message. In this case, it may be difficult to determine whether an object corresponding to the bounding box is a valid object for classification. In the former case, the first device may train the detection model to determine whether an object corresponding to the bounding box is a valid object by estimating the location and size of the object based on the arrangement characteristics of the bounding boxes (e.g., arrangement characteristics on pixels) and checking whether there is a V2X message containing an object type and location information related to the estimated location and size of the object. In the latter case, the first device may train the detection model to remove unnecessary pairs from among all pairs to be combined between the V2X message and the corresponding bounding boxes through a predefined matching method. Through this process, the first device may train the detection model to select or determine a bounding box for an object effective for learning through the V2X message.

Then, the first device may perform object detection on the selected bounding boxes using a method such as CNN (S114) and train the detection model to output classification information for the detected object (S115). The first device may train the detection model to update or modify the classification information by additionally checking whether the classification information is valid based on the location and type information provided in the V2X message (S116). The first device may train the detection model by adjusting the parameters of the detection model through the above-described processes to minimize the loss function of the detection model (that is, to detect the object with a predetermined accuracy).

The detection model learned through this learning operation may more accurately and quickly output classification information by further considering not only the features extracted from the image, but also the location information and type information provided in the V2X messages received in relation to the image.

Hereinafter, a method of training a detection model for detecting an object in an image based on the V2X message or the second message described above and transmitting a first message based on the trained detection model will be described in detail.

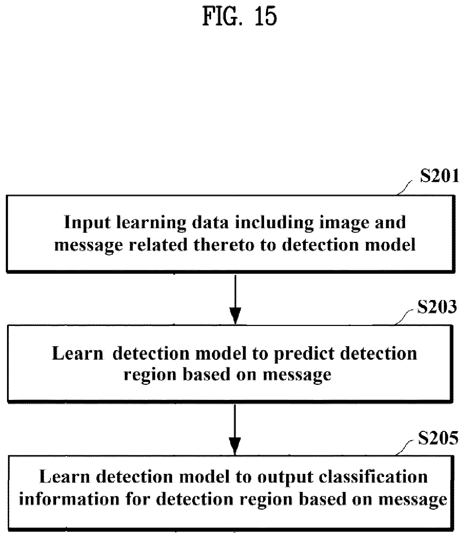

FIG. 15 is a diagram illustrating a method by which a first device trains a detection model based on an image and a message received in response to an image.

The first device may train the detection model to detect an object in the image based on learning data including the image and a V2X message (hereinafter, related message) related to the image or corresponding to the image. Here, the detection region to be described below has a configuration corresponding to the bounding box described above. Learning about the detection model may include learning related to a localization operation that predicts or specifies a detection region requiring object detection in an image and/or learning related to a classification operation that outputs object information for the detection region. The detection model may include a localization model based on learning related to the localization operation and a classification model based on learning related to the classification operation.

Referring to FIG. 15, the first device may input the learning data for learning related to object detection in the image to the detection model (S201). As described above, the learning data may include an image obtained by capturing an object such as a vehicle and a cycle in specific geographical areas and related messages received in relation to the specific geographical area at a time corresponding to a time when the image is obtained.

The first device may train the detection model (or learning about a localization operation) to predict detection regions in which object detection is required based on the image included in the learning data and the corresponding related messages (S203). In detail, the detection model may extract features from the image and predict at least one detection region based on the extracted features and first location information provided in the related message. That is, the detection model may predict the at least one detection region by performing a localization operation related to the image based on the extracted features and the first location information. For example, the detection model may predict a region of the image, corresponding to a preset range, based on the first location information as the at least one detection region. Alternatively, the detection model may predict or determine detection regions in which an object is to be detected based on features of the image and predict at least one detection region corresponding to the first location information from among the determined detection regions (e.g., a detection region including a pixel corresponding to the first location information or a pixel within a preset distance from the pixel).

Alternatively, the first device may train the detection model to adjust the size and shape of the at least one detection region based on the type information provided in the related message. For example, when the type information is a cycle type, the detection model may adjust the size and shape of the at least one detection region to correspond to an object size predefined for the cycle type. Alternatively, the detection model may estimate an object height in the at least one detection region based on Equation 1 and adjust the size or shape of at least one detection region to correspond to the type information when the estimated object height and a height (size, width, or shape) predefined to correspond to the type information are different from each other.

Alternatively, when the at least one detection region includes an overlapped detection region, the first device may train the detection model to determine whether the overlapped detection region is a valid detection region in learning related to the object information based on the overlapped detection region and a related message corresponding thereto. For example, the detection model may estimate an object height or an object size in the overlapped detection region based on Equation 2 or Equation 3 based on pixel coordinate information related to the overlapped detection region. When the estimated object height (or object size) is outside a preset range from the object height according to the type information, the first device or the detection model may not use the overlapped detection region as a learning target for detection of object information to be described below. In contrast, when the estimated object height (or object size) is within a preset range from the object height according to the type information, the first device or the detection model may also use or determine the overlapped detection region as a learning target for detection of the object information.

Alternatively, the first device may directly determine the at least one detection region according to the method described above and input the detection region to the detection model.

Then, the first device may train the detection model (e.g., learning related to the classification operation) to output object detection or classification information for the predicted at least one detection region (S205). As described above, the detection model may detect an object in the at least one detection region by using features in the image corresponding to the at least one detection region based on CNN and output object information or classification information about the detected object. In this case, the first device may train the detection model based on information (type and location information) provided in the related message. In detail, the first device may train the detection model by adjusting parameters related to the detection model to minimize (i.e., to minimize a value of a loss function related to the detection model) a difference value between object information output by the detection model (or an output value corresponding thereto) and information provided in the related message (or output value corresponding thereto).

In this case, the detection model may indirectly obtain label information on the object to be detected through the related message even if it does not receive separate label information (type information, etc.) for the object to be detected in the image and perform learning to detect an object to accurately and quickly detect objects in the image based on label information.

Alternatively, the first device may transmit object information output by the detection model on which the learning is completely performed and at least one second message received from at least one peripheral terminal or at least one second device. Hereinafter, a method of correcting information provided in the second message and transmitting the first message based on object information obtained based on a detection model on which learning is completely performed using the above-described method will be described in detail.

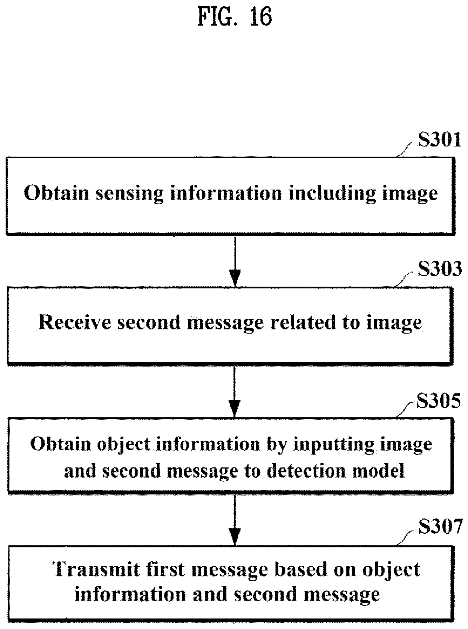

FIG. 16 is a diagram illustrating a method by which a first device transmits a first message based on object information obtained using a detection model and a received second message.

The first device may obtain object information about an object in an image by using a learned detection model as described in FIGS. 11 to 15. In this case, the detection model may propose or determine at least one detection region based on the received second message related to the image. Alternatively, unlike a learning method, the information provided in the second message may not be used in outputting object information or classification information for the at least one detection region. For example, unlike the learning process, the detection model may not consider the type information provided in the second message when predicting object information in the detection region. Alternatively, the detection model may output the object information while proposing at least one detection region in the image based on the second message.

Referring to FIG. 16, the first device may obtain sensing information including an image for a specific geographic region by using a camera (S301). Here, the first device may obtain an image or image information about a plurality of geographical areas through a plurality of cameras.

Then, the first device may receive a second message related with or associated with the sensing information (S303). In detail, the first device may receive the second message based on any one of configuration information (hereinafter, first configuration information) for sidelink communication and/or configuration information (hereinafter, second configuration information) for uplink communication. Here, the first configuration information may be configuration information related to sidelink communication and may include information about a resource pool for transmission and reception of the sidelink signal, and information such as a transmission power control parameter, subchannels, the maximum/minimum value of a modulation coding scheme (MCS) level, a channel busy ratio (CBR) range, a transmission parameter for each CBR range, and threshold speed. The second configuration information may be configuration information related to an uplink signal and may include information such as subcarrier spacking related to the uplink signal, a resource block size, a transmission power control transmission, and a frequency band.

For example, when the second message is based on a sidelink, the first device may receive the second message or transmit the first message based on the first configuration information. In this case, the second message or the first message may be transmitted based on at least one of physical sidelink control channel (PSCCH) and physical sidelink shared channel (PSSCH). For example, the first device may receive a PSCCH (or first SCI) scheduling transmission of the first message and receive the first message (and/or second SCI) transmitted through the PSSCH based on the received PSCCH and/or the first SCI. In this case, the first device may receive and/or decode the second message based on the first SCI and/or the second SCI. Alternatively, the second message may be any one of cooperative awareness message (CAM), vulnerable road user awareness message (VAM), collective perception message (CPM), basic safety message(BSM), and pedestrian safety message (PSM).

Then, the first device may input the image to the detection model (a detection model on which learning is completely performed) to obtain object information (hereinafter referred to as detection object information) for each of at least one object detected in the image (S305). The first device may also input a second message received in association with the image to the detection model. In this case, the detection model may determine or obtain at least one detection region in which a corresponding object in the image is to be detected based on information (e.g., location information, type information, and mobility information) provided in the second message and output object information (location and type of the detected object) about the object detected in the at least one detection region. The first device may directly obtain object information (hereinafter received object information) from the second message.

Then, the first device may correct the received object information based on the detected object information and transmit the first message including the corrected received object information (S307). For example, the received object information may include first location information and first type information, and the detected object information may include second location information and second type information. The first location information may include a location of the second device measured through GPS provided in the second device, and the second location information may include the location of the second device predicted by the detection model based on the image. The first type information may include information about a device type (e.g., pedestrian, car, motorcycle, or cycle) for an object automatically detected or preset by the second device, and the second type information may include information about an object type of the second device detected by the detection model based on the image. In this case, the first device may determine whether the first location information, the second location information are different from each other and the first type information and the second type information are different from each other. For example, when the first location information and the second location information are different from each other, the first device may correct the first location information to correspond to the second location information, and when the first type information and the second type information are different from each other, the first device may correct the first type information to correspond to the second type information. The first device may transmit the second message of the second device to surrounding terminals through the first message including the corrected first location information and/or first type information.

As such, the first device may correct the received object information provided in the received second message by using the obtained object information and transmit information related to the second message to peripheral terminals or surrounding devices through the first message including the corrected received object information.

**Communication system example to which the present disclosure is applied**

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

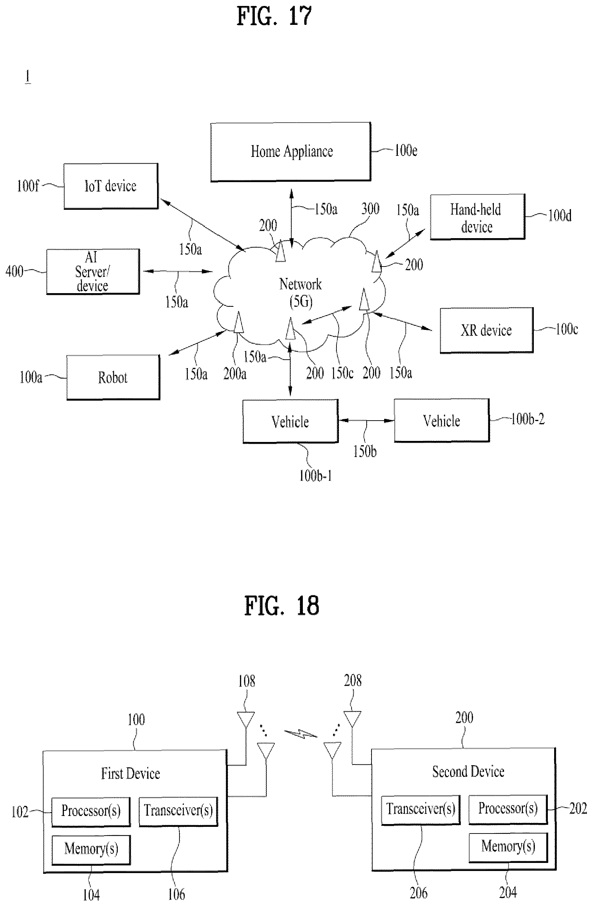

FIG. 17 illustrates a communication system applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Examples of wireless devices to which the present disclosure is applied**

FIG. 18 illustrates a wireless device applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

In detail, the first wireless device 100 may be a first device that is a roadside unit (RSU) or a SoftV2X server including a V2X communication module. The first wireless device 100 may include the processor 102 and the memory 104 connected to the RF transceiver. The memory 104 may include at least one program for performing operations related to the embodiments described in FIGS. 11 to 16.

The processor 102 may obtain sensing information, control the transceiver 106 to receive a second message including first location information and first type information from a second device based on configuration information, obtain object information by inputting an image provided in the sensing information and the second message to a detection model based on an artificial neural network, and transmit the first message for forwarding the second message based on the object information and the second message, and in this case, the configuration information may include first configuration information for a sidelink signal or second configuration information for an uplink signal, the first configuration information may include information about a resource pool for transmission and reception of the sidelink signal and information about transmission power control and subchannels, the second configuration information may include information about a subcarrier spacing, a resource block size, a transmission power control parameter, and a frequency band, the second message may be transmitted based on at least one of PSSCH and PSCCH based on that the configuration information is the second configuration information, and the detection model may predict at least one detection region based on features extracted for the image and the first location information and may be pre-learned to output object information corresponding to the first type information for the at least one detection region. The processor 102 may perform operations related to image processing described in FIGS. 11 to 16 based on the program provided in the memory 104.

Alternatively, the processor 102 and memory 104 may be provided in a chipset. The chip set may include at least one processor, and at least memory operatively connected to the at least one processor and configured to when executed cause the at least one processor to perform an operation including obtaining sensing information, controlling the RF transceiver to receive a second message including first location information and first type information from a second device based on configuration information, obtaining object information by inputting an image provided in the sensing information and the second message to a detection model based on an artificial neural network, and transmitting the first message for forwarding the second message based on the object information and the second message, and in this case, the configuration information may include first configuration information for a sidelink signal or second configuration information for an uplink signal, the first configuration information may include information about a resource pool for transmission and reception of the sidelink signal and information about transmission power control and subchannels, the second configuration information may include information about a subcarrier spacing, a resource block size, a transmission power control parameter, and a frequency band, the second message may be transmitted based on at least one of PSSCH and PSCCH based on that the configuration information is the second configuration information, and the detection model may predict at least one detection region based on features extracted for the image and the first location information and may be pre-learned to output object information corresponding to the first type information for the at least one detection region. The processor 102 may perform operations related to image processing described in FIGS. 11 to 16 based on the program provided in the memory 104.

Alternatively, a computer-readable storage medium including at least one computer program in a wireless communication system may include at least one computer program configured to perform an operation of transmitting a first message by at least one processor, and a computer-readable storage medium with the at least one computer program stored therein, the operation including obtaining sensing information, controlling the RF transceiver to receive a second message including first location information and first type information from a second device based on configuration information, obtaining object information by inputting an image provided in the sensing information and the second message to a detection model based on an artificial neural network, and transmitting the first message for forwarding the second message based on the object information and the second message, and in this case, the configuration information may include first configuration information for a sidelink signal or second configuration information for an uplink signal, the first configuration information may include information about a resource pool for transmission and reception of the sidelink signal and information about transmission power control and subchannels, the second configuration information may include information about a subcarrier spacing, a resource block size, a transmission power control parameter, and a frequency band, the second message may be transmitted based on at least one of PSSCH and PSCCH based on that the configuration information is the second configuration information, and the detection model may predict at least one detection region based on features extracted for the image and the first location information and may be pre-learned to output object information corresponding to the first type information for the at least one detection region.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

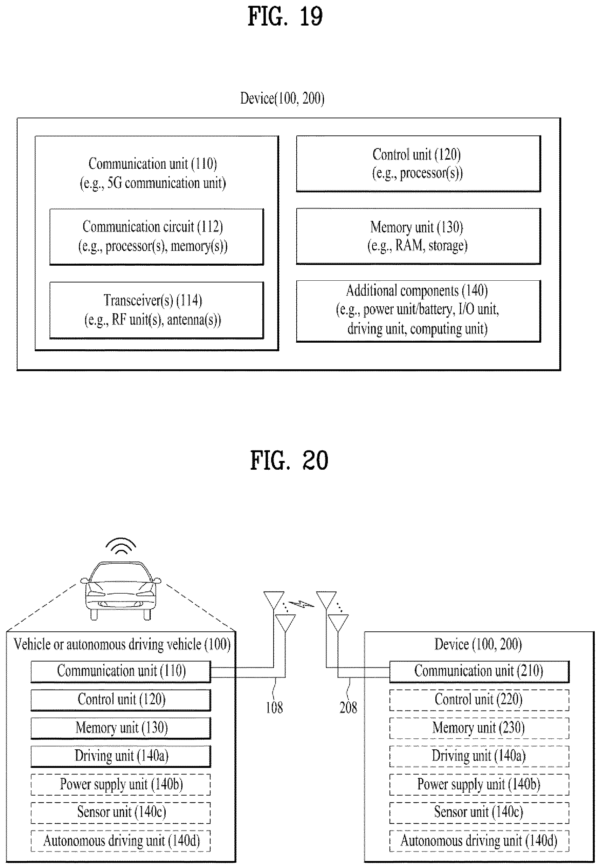

FIG. 19 illustrates another example of a wireless device applied to the present disclosure. The wireless device may be implemented in various forms according to a use-case/service (refer to FIG. 17)

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Examples of vehicles or autonomous vehicles to which the present disclosure is applied**

FIG. 20 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

Embodiments of the present disclosure as described above may be applied to various mobile communication systems.

## Claims

1. A method of transmitting a first message by a first device in a wireless communication system, the method comprising:

obtaining sensing information;
receiving a second message including first location information and first type information from a second device based on configuration information; and
transmitting the first message for forwarding the second message,
wherein the configuration information includes first configuration information for a sidelink signal or second configuration information for an uplink signal,
wherein the first configuration information includes information about a resource pool for transmission and reception of the sidelink signal and information about transmission power control and subchannels,
wherein the second configuration information includes information about a subcarrier spacing, a resource block size, a transmission power control parameter, and a frequency band,
wherein the second message is transmitted based on at least one of physical sidelink shared channel (PSSCH) and physical sidelink control channel(PSCCH) based on that the configuration information is the second configuration information,
wherein the first device obtains object information by inputting an image provided in the sensing information and the second message to a detection model based on an artificial neural network and transmits the first message based on the object information and the second message, and
wherein the detection model predicts at least one detection region based on features extracted for the image and the first location information and is pre-learned to output object information corresponding to the first type information for the at least one detection region.

2. The method of claim 1, wherein the at least one detection region is predicted based on the first location information and a preset range.

3. The method of claim 1, wherein the at least one detection region includes a detection region within a preset range from location information provided in the second message from among a plurality of detection regions determined based on the features extracted from the image.

4. The method of claim 1, wherein, based on that an object height estimated based on the at least one detection region is outside a preset range from the object height based on the type information, the at least one detection region is not used as data for learning the detection model.

5. The method of claim 4, wherein the object height is estimated only for the at least one detection region that overlaps another detection region.

6. The method of claim 1, wherein the object information includes second type information and second location information of the detected object.

7. The method of claim 6, wherein, based on that the first type information and the second type information are different from each other, the first message includes the first type information corrected based on the second type information.

8. The method of claim 1, wherein, based on that the first location information is different from the second location information, the first message includes the first location information corrected based on the second location information.

9. The method of claim 1, wherein the first device uses type information provided in the second message as label information for learning of the detection model.

10. The method of claim 1, wherein the detection model outputs the object information based on regions with convolutional neuron network (R-CNN).

11. The method of claim 1, wherein the second message includes a vehicle to everything (V2X) message.

12. A first device for transmitting a first message in a wireless communication system, the first device comprising:

a radio frequency (RF) transceiver; and
a processor connected to the RF transceiver,
wherein the processor is configured to obtain sensing information, control the RF transceiver to receive a second message including first location and first type information from a second device based on configuration information, obtain object information by inputting an image provided in the sensing information and the second message to a detection model based on an artificial neural network, and transmit the first message for forwarding the second message based on the object information and the second message,
wherein the configuration information includes first configuration information for a sidelink signal or second configuration information for an uplink signal,
wherein the first configuration information includes information about a resource pool for transmission and reception of the sidelink signal and information about transmission power control and subchannels,
wherein the second configuration information includes information about a subcarrier spacing, a resource block size, a transmission power control parameter, and a frequency band,
wherein the second message is transmitted based on at least one of physical sidelink control channel (PSCCH) and physical sidelink shared channel (PSSCH) based on that the configuration information is the second configuration information, and
wherein the detection model predicts at least one detection region based on features extracted for the image and the first location information and is pre-learned to output object information corresponding to the first type information for the at least one detection region.

13. The first device of claim 12, wherein the at least one detection region is predicted based on location information provided in the second message and a preset range.

**14.** A chip set for transmitting a first message in a wireless communication system, the chip set comprising:

at least one processor; and
at least memory operatively connected to the at least one processor and configured to when executed cause the at least one processor to perform an operation including:

obtaining sensing information; controlling the RF transceiver to receive a second message including first location and first type information from a second device based on configuration information; obtaining object information by inputting an image provided in the sensing information and the second message to a detection model based on an artificial neural network; and transmitting the first message for forwarding the second message based on the object information and the second message,
wherein the configuration information includes first configuration information for a sidelink signal or second configuration information for an uplink signal,
wherein the first configuration information includes information about a resource pool for transmission and reception of the sidelink signal and information about transmission power control and subchannels,
wherein the second configuration information includes information about a subcarrier spacing, a resource block size, a transmission power control parameter, and a frequency band,
wherein the second message is transmitted based on at least one of physical sidelink control channel (PSCCH) and physical sidelink shared channel (PSSCH) based on that the configuration information is the second configuration information, and
wherein the detection model predicts at least one detection region based on features extracted for the image and the first location information and is pre-learned to output object information corresponding to the first type information for the at least one detection region.

**15.** A computer-readable storage medium including at least one computer program in a wireless communication system, the computer-readable storage medium comprising:

at least one computer program configured to perform an operation of transmitting a first message by at least one processor; and
a computer-readable storage medium with the at least one computer program stored therein,
wherein the operation includes: obtaining sensing information; controlling the RF transceiver to receive a second message including first location and first type information from a second device based on configuration information; obtaining object information by inputting an image provided in the sensing information and the second message to a detection model based on an artificial neural network, and transmitting the first message for forwarding the second message based on the object information and the second message,
wherein the configuration information includes first configuration information for a sidelink signal or second configuration information for an uplink signal,
wherein the first configuration information includes information about a resource pool for transmission and reception of the sidelink signal and information about transmission power control and subchannels,
wherein the second configuration information includes information about a subcarrier spacing, a resource block size, a transmission power control parameter, and a frequency band,
wherein the second message is transmitted based on at least one of physical sidelink control channel (PSCCH) and physical sidelink shared channel (PSSCH) based on that the configuration information is the second configuration information, and
wherein the detection model predicts at least one detection region based on features extracted for the image and the first location information and is pre-learned to output object information corresponding to the first type information for the at least one detection region.

FIG. 1

Evolution to 5G,
while maintaining backward compatibility

Advanced use cases
5G V2X R16

Enhanced safety
C-V2X R14/15

Higher throughput    Wideband raging
Higher reliability    and positioning
                      Lower latency

Basic safety
802.11p or C-V2X R14

Enhanced range and reliability

| Vehicle Platooning | Extended Sensors |

| Remote Driving | Advanced Driving |

# FIG. 2

# FIG. 3

# FIG. 4

# FIG. 5

# FIG. 6

PU5-U

(a)

PU5-U

(b)

# FIG. 7

BS (e.g. eNB or gNB)

UE1                    UE2

# FIG. 8

Frequency

| Unit #($N_F$-1) | Unit #(2$N_F$-1) | | Unit #($N_F$*$N_T$-1) | Unit #($N_F$-1) |
| Unit #1 | Unit #($N_F$+1) | | Unit #($N_F$*$N_T$-$N_F$+1) | Unit #1 |
| Unit #0 | Unit #$N_F$ | | Unit #($N_F$*$N_T$-$N_F$) | Unit #0 |

Time

D2D signal transmission
from a UE allocated with unit #0

D2D signal transmission
from a UE allocated with unit #0

# FIG. 9

# FIG. 10

C-V@X (LTE-V2X) in US

| Applications | | | |
|---|---|---|---|
| | Security (IEEE 1609.2) | | NON-IP |
| Facilities | | | PDCP |
| Requirements & Profile (SAE J3161, ...) | | UDP/TCP/others | RLC |
| Message Dictionary (SAE J2735) | | | |
| | WSMP (IEEE 1609.3) | IPv6 | |
| Management | ProSe Signaling | | MAC |
| | | | PHY |

C-V@X (LTE-V2X) in EU

| Applications | | | |
|---|---|---|---|
| | Security (ETSI TS 102 940, ...) | | NON-IP |
| Facilities | | | PDCP |
| Requirements & Profile (ETSI EN 302 637, ...) | BTP (ETSI EN 302 636-5) | UDP/TCP/others | RLC |
| Message Dictionary (ETSI EN 102 894-2) | GeoNetworking (ETSI EN 302 636-4) | IPv6 | |
| Management | ProSe Signaling | | MAC |
| | | | PHY |

FIG. 11

(a)

(b)

(c)

(d)

# FIG. 12

(a)

(b)

FIG. 13

# FIG. 14

```
┌─────────────────────────┐
│      Input image        │──~S111
└─────────────────────────┘
            │
            ▼
┌─────────────────────────┐
│   Search for bounding box│──~S112
└─────────────────────────┘
            │
            ▼
┌─────────────────────────┐
│ Extract bounding box from│──~S113
│       V2X message        │
└─────────────────────────┘
            │
            ▼
┌─────────────────────────┐
│      Perform CNN        │──~S114
└─────────────────────────┘
            │
            ▼
┌─────────────────────────┐
│     Classification      │──~S115
└─────────────────────────┘
            │
            ▼
┌─────────────────────────┐
│ Compare V2X message with result│──~S116
│ and update learning result│
└─────────────────────────┘
```

# FIG. 15

S201

Input learning data including image and message related thereto to detection model

S203

Learn detection model to predict detection region based on message

S205

Learn detection model to output classification information for detection region based on message

FIG. 16

S301

Obtain sensing information including image

S303

Receive second message related to image

S305

Obtain object information by inputting image and second message to detection model

S307

Transmit first message based on object information and second message

# FIG. 17

# FIG. 18

# FIG. 19

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 20

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

<table>
<tr><td colspan="2" align="center"><b>INTERNATIONAL SEARCH REPORT</b></td><td>International application No.<br><br><b>PCT/KR2022/017299</b></td></tr>
</table>

**A. CLASSIFICATION OF SUBJECT MATTER**

**G06T 7/11**(2017.01)i; **G06T 7/70**(2017.01)i; **G06V 20/56**(2022.01)i; **H04W 4/40**(2018.01)i; **H04W 4/12**(2009.01)i; **G06N 3/08**(2006.01)i

According to International Patent Classification (IPC) or to both national classification and IPC

**B. FIELDS SEARCHED**

Minimum documentation searched (classification system followed by classification symbols)

G06T 7/11(2017.01); G06K 9/00(2006.01); G06K 9/62(2006.01); G06N 3/04(2006.01); G06N 3/08(2006.01); H04W 4/02(2009.01); H04W 4/40(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 센싱(sensing), 위치(location), 인공 신경망(artificial neural network), 객체(object), 타입(type), 검출 영역(detection area), 사이드링크(sidelink), 비디오(video)

**C. DOCUMENTS CONSIDERED TO BE RELEVANT**

| Category* | Citation of document, with indication, where appropriate, of the relevant passages | Relevant to claim No. |
|---|---|---|
| Y | US 2019-0294966 A1 (COHDA WIRELESS PTY LTD.) 26 September 2019 (2019-09-26)<br>See paragraphs [0003], [0077] and [0107]; and claims 1-2, 8 and 14. | 1-15 |
| Y | KR 10-2020-0051577 A (LG ELECTRONICS INC.) 13 May 2020 (2020-05-13)<br>See paragraphs [0058], [0073], [0088], [0108] and [0174]. | 1-15 |
| A | US 2020-0242478 A1 (STRADVISION, INC.) 30 July 2020 (2020-07-30)<br>See paragraphs [0057]-[0058]. | 1-15 |
| A | KR 10-2021-0038323 A (KT CORPORATION) 07 April 2021 (2021-04-07)<br>See claims 1-11. | 1-15 |
| A | KR 10-2020-0063320 A (HYUNDAI MOTOR COMPANY et al.) 05 June 2020 (2020-06-05)<br>See paragraphs [0032]-[0050]. | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 February 2023** | **17 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/017299**

| Patent document cited in search report | | | Publication date (day/month/year) | Patent family member(s) | | | Publication date (day/month/year) |
|---|---|---|---|---|---|---|---|
| US | 2019-0294966 | A1 | 26 September 2019 | AU | 2019-202088 | A1 | 10 October 2019 |
| | | | | EP | 3547215 | A1 | 02 October 2019 |
| KR | 10-2020-0051577 | A | 13 May 2020 | CN | 111448807 | A | 24 July 2020 |
| | | | | CN | 111448807 | B | 14 December 2021 |
| | | | | EP | 3675529 | A1 | 01 July 2020 |
| | | | | EP | 3675529 | B1 | 07 April 2021 |
| | | | | JP | 2021-170815 | A | 28 October 2021 |
| | | | | JP | 2021-508419 | A | 04 March 2021 |
| | | | | JP | 6918214 | B2 | 11 August 2021 |
| | | | | JP | 7201753 | B2 | 10 January 2023 |
| | | | | KR | 10-2021-0091361 | A | 21 July 2021 |
| | | | | US | 10893390 | B2 | 12 January 2021 |
| | | | | US | 2020-0178039 | A1 | 04 June 2020 |
| | | | | US | 2021-0112375 | A1 | 15 April 2021 |
| | | | | WO | 2020-091380 | A1 | 07 May 2020 |
| US | 2020-0242478 | A1 | 30 July 2020 | CN | 111508252 | A | 07 August 2020 |
| | | | | EP | 3690756 | A1 | 05 August 2020 |
| | | | | JP | 2020-123348 | A | 13 August 2020 |
| | | | | JP | 6892157 | B2 | 23 June 2021 |
| | | | | KR | 10-2020-0094644 | A | 07 August 2020 |
| | | | | KR | 10-2373493 | B1 | 14 March 2022 |
| | | | | US | 10733511 | B1 | 04 August 2020 |
| KR | 10-2021-0038323 | A | 07 April 2021 | US | 2022-0346011 | A1 | 27 October 2022 |
| | | | | WO | 2021-060786 | A1 | 01 April 2021 |
| KR | 10-2020-0063320 | A | 05 June 2020 | US | 10963711 | B2 | 30 March 2021 |
| | | | | US | 2020-0160073 | A1 | 21 May 2020 |

Form PCT/ISA/210 (patent family annex) (July 2022)